(19) Europäisches Patentamt
European Patent Office
Office européen des brevets

(11) **EP 2 320 534 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(21) Anmeldenummer: **10014255.3**

(22) Anmeldetag: **03.11.2010**

(51) Int Cl.:
*H02G 15/105* (2006.01)    *H02H 7/22* (2006.01)

(54) **Drehstromkabelsysteme mit Kompensationsbeschaltungen**

Alternating current cable systems with compensation circuits

Systèmes de câbles triphasés dotés de raccordements de compensation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2009 DE 102009051959**
**06.02.2010 DE 102010007078**

(43) Veröffentlichungstag der Anmeldung:
**11.05.2011 Patentblatt 2011/19**

(73) Patentinhaber: **nkt cables GmbH & Co. KG**
**51061 Köln (DE)**

(72) Erfinder: **May, Hans-Peter**
**51467 Bergisch-Gladbach (DE)**

(56) Entgegenhaltungen:
**EP-B1- 0 071 435**

• **"60-500 kV High Voltage Underground Power Cables", , 1. Dezember 2004 (2004-12-01), XP055021578, Gefunden im Internet: URL:http://www.nexans.no/eservice/Norway-n o_NO/fileLibrary/Download_540199654/Norway /files/Underground_power_cables.pdf [gefunden am 2012-03-12]**

**Beschreibung**

Die Erfindung betrifft Drehstromkabelsysteme für Hoch- und Höchstspannung mit Kompensationsbeschaltungen zur Kompensation von induzierten Schirmspannungen.

Hoch- und Höchstspannungskabel weisen aus unterschiedlichen Betriebserfordernissen heraus metallene Mäntel oder Schirme (im Folgenden verkürzt: "Kabelschirme") oberhalb der elektrischen Isolierung auf. Unter Betriebsaspekten ist die beidseitige Erdung dieser Metallschirme zur galvanischen Durchverbindung der beiden Kabelenden wünschenswert, beispielsweise zur Realisierung günstiger Erdungsverhältnisse im Fehlerfall.

Bei Einleiterkabeln größerer Übertragungsleistungen, d.h. auch größerer Leiterquerschnitte, führt die beidseitige Schirm-Erdung ohne Gegenmaßnahmen zu unzulässig hohen, induzierten Schirmströmen und -verlusten. Eine herkömmliche Gegenmaßnahme ist das Auskreuzen der Kabelschirme, das sogenannte Cross-Bonding (vgl. beispielsweise DE 19512018 C1 oder EP 71 435 B1). Hierbei wird ein Hauptabschnitt der Kabelanlage in drei gleichlange Unterabschnitte unterteilt. Am Ende jedes Unterabschnitts werden die Kabelschirme aufgetrennt, gegeneinander isoliert und durch Überspannungsableiter geschützt. Der Kabelschirm eines Einleiterkabels wird dann am Ende des Unterabschnitts in zyklischer Zuordnung mit dem folgenden Unterabschnitt eines anderen Einleiterkabels verbunden, so dass sich immer die drei etwa um 120° gegeneinander phasenversetzten Längsspannungen der drei hintereinander geschalteten Kabelschirme — abhängig von der Verlegegeometrie — etwa zu Null ergänzen.

Verschiedene Ausführungen von Kompensationsbeschaltungen (mit Auskreuzung und ohne) werden im englischen Sprachraum unterschieden mit 'single point bonding', mit 'multi point bonding' und mit 'cross-bonding' (letzteres auch Auskreuzungsbeschaltung), vgl US 4464583 A.

Es zeichnet sich ab, dass über erweiterte Produktions- und Liefermöglichkeiten der Kabelhersteller in naher Zukunft selbst bei Höchstspannungskabeln Lieferlängen bis zu 3000 m möglich sein werden. Solche vergrößerten Lieferlängen bedeuten für das Auskreuzen der Kabelschirme vergrößerte Unterabschnittslängen und damit erhöhte betriebsfrequente und auch transiente Spannungen an den Trennstellen, so dass Zusatzmaßnahmen erforderlich werden. Eine aufwendige Maßnahme hierzu sind sogenannte Auskreuzungsmuffen, bei denen nicht nur die Kabelschirme, sondern auch die darunterliegenden äußeren Leitschichten aufgetrennt werden müssen. Da solche Maßnahmen in den Bereich des elektrischen Feldes der Kabel eingreifen, sind sie möglichst zu vermeiden oder ihre Anzahl zu minimieren.

Es ist die Aufgabe der Erfindung, als Weiterentwicklung von Auskreuzungsbeschaltungen Maßnahmen zur Kompensation von induzierten Schirmspannungen in Drehstromkabelsystemen anzugeben, die mit überlangen Unterabschnittslängen ausgelegt sind.

Die Lösung der Aufgabe wird in den Merkmalen mehrerer Nebensprüche wiedergegeben. Vorteilhafte Ausgestaltungen finden sich jeweils in den zugeordneten Unteransprüchen.

Mit der Erfindung können überlange eine Kabelstrecke bildende Unterabschnittslängen, oder längere Cross-Bonding-Hauptabschnitte (bis hin zur Verdopplung) bei gleichbleibenden stationären Schirmspannungen ermöglicht werden.

Der Kern der Erfindung sind Kompensationsmaßnahmen bei einer Auskreuzungsbeschaltung mit gleichlangen eine Kabelstrecke bildenden Unterabschnitten und bei Beschaltungen von 'single point bonded' - Kabelsystemen. Beim 'single point bonding' werden die Kabelschirmenden der drei Einleiterkabel in mindestens einer Trennstelle eines (Unter-)-Abschnitts verdrahtet und geerdet. Solche (Unter-)-Abschnitte sind bei dieser Verschaltung in einem Drehstromkabelsystem dann unabhängig von einander und können dann mehrfach wiederholt werden.

In jedem (Unter-)-Abschnitt ist mindestens einem der Einleiterkabel jeweils parallel zur Kabelstrecke - also in Längsrichtung - mindestens ein Kompensationskabel eng benachbart und diesem ein als Neutralpfadkabel ausgebildeter Leiter zugeordnet. Kompensationskabel und Neutralpfadkabel (oder Neutralpfadleiter) haben eine kürzere Länge (Teillänge) als die Einleiterkabel. Das mindestens eine einem Einleiterkabel benachbarte mindestens eine Kompensationskabel ist an das offene Kabelschirmende des mindestens einen Einleiterkabels angeschlossen. Dieses angeschlossene Kompensationskabel ist an seinem zweiten Ende über das dem mindestens einen Einleiterkabel zugeordnete Neutralpfadkabel geerdet. Für einen Sonderfall kann die Erdung an einem Schaltpunkt (in der Mitte eines Unterabschnitts) mit Anbindung an zugeordnete Neutralpfadkabel erfolgen.

Ein Neutralpfadkabel zeichnet sich dadurch aus, dass es dicht entlang der Einleiterkabel geführt wird. Drei Neutralpfadkabel werden in jeweils gleichlangen Abschnitten den drei Eileiterkabeln zugeordnet, wobei sie - ähnlich wie bei den Cross-Bonding-Unterabschnitten - drei um 120° phasenversetzte, sich zu Null ergänzende Schirmspannungen induziert bekommen. Liegen die drei Einleiterkabel äquidistant in einer Ebene, so kann das Neutralpfadkabel auch über die halbe Länge zwischen mittlerem und linken Einleiterkabel und über die Restlänge zwischen mittleren und rechtem Einleiterkabel (bei rund 70% des Achsabstands von dem mittleren Einleiterkabel) geführt werden. Zum Anschluss an drei benötigte Kompensationskabel-(Paare) wird das Neutralpfadkabel im allgemeinen Fall als dreiadriges Kabel ausgeführt. Es kann allerdings auch, wenn alle drei Kompensationskabel an dasselbe Potential angeschlossen werden, einadrig ausgeführt werden. Die Anschlusspunkte eines Neutralpfadkabels an ein Kompensationskabel sind solche Punkte, in denen das Potential Erdpotential ist.

Kompensationskabel und Neutralpfadkabel müssen in ihrer elektrischen Festigkeit dem Korrosionsschutz der Einleiterkabel entsprechen. Hierzu reichen beispielsweise 10-kV-VPE-Kabel aus, deren Leiterquerschnitt sollte dem Schirmquerschnitt äquivalent sein. Die Übergänge von den Kompensationskabeln auf das Neutralpfadkabel sind ggfs. zusätzlich durch nichtlineare Widerstände zu schützen. Dennoch sollte sich dieser Zusatzaufwand in vergleichsweise akzeptablen Grenzen halten, ermöglicht er doch die nahezu freie Auswahl der Muffenstandorte.

Eine Variante der Ausführung eines Kompensationskabels kann wie folgt vorgesehen sein. Der Leiter eines Kompensationskabels kann in einem Einleiterkabel integriert sein: auf dem ,normalen' Kabelschirm des Einleiterkabels liegt eine 1kV-Isolierung; darüber ist ein zweiter metallischer Kabelschirm aufgebracht; und das Kabel mit einem üblichen Außenmantel rundum geschlossen. Der zweite metallische Kabelschirm wird als Kompensationsleiter benutzt. Damit könnte ein Einzelkabel parallel, und dicht benachbart zum Einleiterkabel als Kompensationskabel entfallen.

Als besonderer Vorteil der Erfindung kann hervorgehoben werden, dass sich allein durch die Vergrößerung der Lieferlängen die Fehlerraten bei VPE-Höchstspannungskabelanlagen stark senken ließen. Gleichzeitig reduzieren sich längenbezogene Kosten der Kabelanlagen.

Wesentliche Ausführungsformen der Erfindung sind im folgenden aufgezählt:

In einer ersten Ausführungsform eines Drehstromkabelsystems aus kunststoffisolierten und mit metallischem Kabelschirm versehenen Einleiterkabeln mit Auskreuzungsbeschaltung sind die Einleiterkabel in drei Unterabschnitte aufgeteilt. Die Unterabschnitte sind durch Trennstellen begrenzt, in denen die Kabelschirme der Einleiterkabel aufgetrennt und zugänglich sind. Als besondere Merkmale hierzu werden genannt,

■ dass in einem ersten Unterabschnitt einem ersten Einleiterkabel und in einem dritten Unterabschnitt einem dritten Einleiterkabel jeweils parallel zur Kabelstrecke ein Kompensationskabel eng benachbart zugeordnet ist, wobei die Kompensationskabel eine kürzere Länge als die Einleiterkabel haben,
■ und dass jedes der beiden einem Einleiterkabel im ersten und im dritten Unterabschnitt benachbarten Kompensationskabel mit seinem ersten Ende an das offene Kabelschirmende des eng benachbarten Einleiterkabels angeschlossen sind,
■ und die angeschlossenen Kompensationskabel an seinem zweiten Ende je über ein Neutralpfadkabel geerdet sind,
■ und dass in einem zweiten Unterabschnitt dem zweiten Einleiterkabel jeweils parallel zur Kabelstrecke zwei Kompensationskabel eng benachbart so zugeordnet sind, dass jedes der Kompensationskabel mit seinem ersten Ende an je ein offenes Kabelschirmende des zweiten Einleiterkabels im zweiten Unterabschnitt angeschlossen sind, und dass den beiden Kompensationskabeln im zweiten Unterabschnitt je ein erstes und ein zweites Neutralpfadkabel zugeordnet ist und an sie angeschlossen ist, wobei die Kompensationskabel eine kürzere Länge als das zweite Einleiterkabel haben, wobei vorzugsweise die kürzere Länge der halben Länge des Neutralpfadkabels und Kompensationskabels des ersten und des dritten Unterabschnitts entsprechen kann, und

■ das erste Neutralpfadkabel im zweiten Unterabschnitt an das offene Kabelschirmende des ersten Einleiterkabels im ersten Unterabschnitt und das zweite Neutralpfadkabel im zweiten Unterabschnitt an das offene Kabelschirmende des dritten Einleiterkabels im dritten Unterabschnitt jeweils andernends angeschlossen ist, und wobei sich Anordnungen von Kompensationskabeln und Neutralpfadkabeln analog in zyklischer Vertauschung der Zuordnung von Phasen und Einleiterkabeln in jedem Unterabschnitt wiederholen.

Bei diesem ersten Drehstromkabelsystem wird als besondere und vorteilhafte Ausgestaltung vorgeschlagen, dass in jedem Unterabschnitt, die jeweils gleichlang ausgebildet sind, die Kompensationskabel und die Neutralpfadkabel in einer Länge ausgelegt sind, bei der eine kleinstmögliche Schirmspannung auftritt.

Weiter wird ein zweites Drehstromkabelsystem aus kunststoffisolierten und mit metallischem Kabelschirm versehenen Einleiterkabeln mit single-bonding-System betrachtet.

Bei diesem Drehstromkabelsystem ist ein Abschnitt zwischen einer ersten und einer zweiten Trennstelle gebildet, wobei in der ersten Trennstelle zu Anfang des Abschnitts ein erstes Kabelschirmende der Einleiterkabel und in der zweiten Trennstelle am Ende des Abschnitts ein zweites Kabelschirmende der Einleiterkabel aufgetrennt und zugänglich sind. In mindestens einer Trennstelle sind die Kabelschirmenden der Einleiterkabel nur über Kompensationskabel - ohne Verwendung von Überspannungsableiter geerdet.

Das Drehstromkabelsystem zeichnet sich dadurch aus,

■ dass parallel zur Kabelstrecke im Abschnitt jedem Einleiterkabel zwei Kompensationskabel hintereinander eng benachbart zugeordnet sind,
■ dass ein erstes Ende des ersten Kompensationskabels am ersten Kabelschirmende des benachbarten Einleiterkabels angeschaltet ist,
■ dass ein zweites Ende des zweiten Kompensationskabels am zweiten Kabelschirmende des benachbarten Einleiterkabels angeschaltet ist, und

■ dass im Abschnitt zwei Neutralpfadkabel parallel zum Abschnitt und hintereinander angeordnet sind, und

■ dass ein zweites Ende des ersten Kompensationskabels an das erste Neutralpfadkabel geschaltet und über dieses Neutralpfadkabel geerdet ist und ein zweites Ende des zweiten Kompensationskabels an das zweite Neutralpfadkabel geschaltet und über dieses geerdet ist.

Eine besondere Ausführungsform besteht darin, dass die Erdung der Kabelschirme über Ableiter erfolgt und die Neutralpfadkabel ebenfalls über Ableiter an Erdpotential liegen. Das heißt, dass in beiden Trennstellen die Kabelschirmenden jeweils der Einleiterkabel über Überspannungsableiter geerdet sind, und dass in der Mitte des Abschnitts Schaltpunkte zwischen dem zweiten Ende der ersten Kompensationskabel und erstem Neutralpfadkabel und Schaltpunkte zwischen dem ersten Ende der zweiten Kompensationskabel und zweitem Neutralpfadkabel vorhanden sind und die Schaltpunkte über Überspannungsableiter geerdet sind.

Eine andere, vorteilhafte Ausführungsform besteht darin, dass in beiden Trennstellen die Kabelschirmenden jeweils der Einleiterkabel über Überspannungsableiter geerdet sind, und dass die beiden hinter einander liegenden Kompensationskabel mit ihren zweiten Enden in der Mitte des Abschnitts in einem Schaltpunkt verbunden sind, und dass in diesem Schaltpunkt eine Erdung erfolgt.

Wieder eine andere Ausführungsform ist dadurch gestaltet, dass in dem vorbeschriebenem Drehstromkabelsystem in beiden Trennstellen die Kabelschirmenden jeweils der Einleiterkabel über Überspannungsableiter geerdet sind, und dass in der Mitte des Abschnitts die beiden hinter einander liegenden Kompensationskabel mit ihren zweiten Enden in einem Schaltpunkt verbunden sind.

Das vorbeschriebene Drehstromkabelsystem kann insbesondere derart ausgestaltet sein, dass Kompensationskabel und Neutralpfadkabel eine Länge von der Hälfte des Abschnitts haben. Die Länge der Kompensationskabel und Neutralpfadkabel kann optimiert werden, indem in beiden Trennstellen die Kabelschirmenden jeweils der Einleiterkabel über Überspannungsableiter geerdet sind, und die beiden hinter einander liegenden Kompensationskabel jeweils eine Länge haben, die größer ist als die Hälfte des Abschnitts. Hierzu wird in der Figurenbeschreibung eine besondere Darstellung vorgenommen.

Wiederum wird ein Drehstromkabelsystem aus kunststoffisolierten und mit metallischem Kabelschirm versehenen Einleiterkabeln betrachtet, bei dem eine Erdung der Kompensationskabel über Ableiter erfolgt und die Kompensationskabel an einem Schaltpunkt zusammengeführt sind und dort eine feste Erdung vorhanden ist.

Ebenfalls ist ein Abschnitt zwischen zwei Trennstellen gebildet. In der ersten Trennstelle ist ein erstes Kabelschirmende jeweils der Einleiterkabel und in der zweiten Trennstelle ist ein zweites Kabelschirmende jeweils der Einleiterkabel aufgetrennt und zugänglich. In mindestens einer Trennstelle sind die Kabelschirmenden der Einleiterkabel geerdet. Das Drehstromkabelsystem ist so gekennzeichnet, dass parallel zur Kabelstrecke im Abschnitt jedem Einleiterkabel zwei Kompensationskabel hintereinander eng benachbart zugeordnet sind,

■ dass jeweils ein erstes Ende des ersten Kompensationskabels am ersten Kabelschirmende angeschaltet ist,

■ und jeweils ein zweites Ende des zweiten Kompensationskabels am zweiten Kabelschirmende angeschaltet ist, und

■ dass jeweils die beiden hintereinander liegenden Kompensationskabel in ihren anderen Enden in der Mitte des Abschnitts in einem Schaltpunkt verbunden sind, und dass in diesem Schaltpunkt eine Erdung erfolgt.

Bei einer weiteren Ausführungsform eines Drehstromkabelsystems wird keine feste Erdung der Kabelschirme in der Trennstelle vorgenommen; Erdung erfolgt über Neutralpfadkabel. In dem Drehstromkabelsystem aus kunststoffisolierten und mit metallischem Kabelschirm versehenen Einleiterkabeln ist ein Abschnitt zwischen zwei Trennstellen gebildet. In der ersten Trennstelle ist ein erstes Kabelschirmende jeweils der Einleiterkabel und in der zweiten Trennstelle ist ein zweites Kabelschirmende jeweils der Einleiterkabel aufgetrennt und zugänglich. In mindestens einer Trennstelle sind die Kabelschirmenden der Einleiterkabel geerdet.

Die Besonderheit der Ausführung liegt darin, dass parallel zur Kabelstrecke jedem Einleiterkabel zwei Kompensationskabel hintereinander eng benachbart zugeordnet sind, und jeweils ein erstes Ende des ersten Kompensationskabels am ersten Kabelschirmende angeschaltet ist, und ein zweites Ende des zweiten Kompensationskabels am zweiten Kabelschirmende angeschaltet ist, und die Erdung der Kabelschirmenden über je ein zu den Kompensationskabeln parallel im Abschnitt liegendes Neutralpfadkabel erfolgt.

Die besondere Ausgestaltungen sind ausführlich auch in der Figurenbeschreibung zu finden.

Abschließend kann noch auf den Vorteil verwiesen werden, dass die Kompensationsleiterkabel an jeder Stelle längs der Trasse leicht zugänglich und beschaltbar sind. Sollten sich für eine Anlage die an den Enden auftretenden Überspannungen oder Ableiterbeanspruchungen als kritisch herausstellen, so besteht die Möglichkeit, diese Kompensationsleiterkabel auch an geeigneten Stellen auf der Strecke zusätzlich mit Ableitern zu beschalten, um einlaufende Spannungswellen zu begrenzen und so den Schirmbereich der Hoch- oder Höchstspannungskabel und die Ableiter an ihren Enden weiter zu entlasten.

Einzelheiten und Vorteile der Erfindung werden in Figuren wiedergegeben, wobei diese im Einzelnen zeigen:

Fig. 1: Beschaltung von drei Unterabschnitten eines Hauptabschnittes;

Fig. 2: Zeigerbild zur Schaltung in Fig. 1;

Fig. 3: bezogene maximale Schirmspannung und mögliche prozentuale Abschnittsver- längerung in Fig. 1;

Fig. 4: Beschaltung eines Abschnitts A1 zur Halbierung der Schirmspannungen;

Fig. 5a: zu Fig. 4: Zeigerdiagramm der Schirmspannung in Abschnitt A1;

Fig. 5b: räumliche Verteilung der Spannungen in der Anordnung nach Fig. 4;

Fig. 6: Ableiter-Beschaltung im Abschnitt A1;

Fig. 7: wie zu Fig. 6, aber starre Erdung in der Mitte des Abschnitts;

Fig. 8: wie zu Fig. 7, Sonderfall ohne Neutralpfadkabel;

Fig. 9: wie zu Fig. 7, mit Neutralpfadkabel als Erdungsleiter, ohne Erdung in der Mitte und

Fig. 10: Modifikation zum Ausgleich der unterschiedlichen Spannungsbeläge von Kabelschirm und Kompensationsleiter.

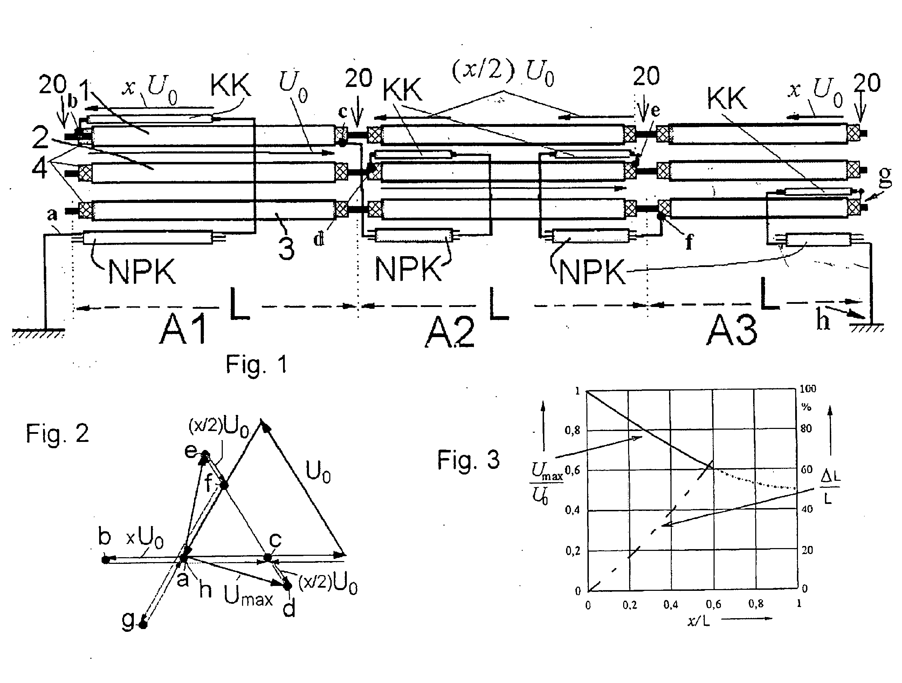

Zur Erzielung möglichst großer eine Kabelstrecke bildenden Unterabschnittslängen A1, A2, A3 bei gleichbleibenden stationären Schirmspannungen einer Auskreuzungsbeschaltung wird eine erste Beschaltung der Kabelschirme 4.1, 4.2, 4.3 zur Kompensation der induzierten Längsspannung nach Fig. 1 vorgeschlagen. Hierbei sollen die Lieferlängen der Kabel und damit auch die Muffenabstände bzw. Unterabschnittslängen gleichgroß vorliegen. Die Spannungen $U_0$ sind die für symmetrisches Cross-Bonding auftretende, sich zu Null ergänzenden Längsspannung. Die Kabelschirmenden (4.1, 4.2, 4.3) am Anfang und am Ende des Hauptabschnittes (A1 links, A3 rechts) werden nicht direkt geerdet, sondern mit einem Kompensationskabel KK verbunden. Die Kabelschirmenden 4.1, 4.2, 4.3 im mittleren Längsunterabschnitt A2 werden ebenso an je ein Kompensationskabel KK geführt.

Die Kompensationskabel KK liegen direkt neben den Einleiterkabeln 1, 2, 3 und bekommen damit näherungsweise die zu kompensierende Längsspannung der Schirme 4.1, 4.2, 4.3 induziert. Am Ende der Kompensationskabel KK werden diese auf ein Neutralpfadkabel NPK geschaltet, das ohne eine induzierte Längsspannung zum Anfang (Erdung am Punkt a), bzw. zum Ende des Hauptabschnittes (Erdung am Punkt h) zurückführt und dort geerdet wird.

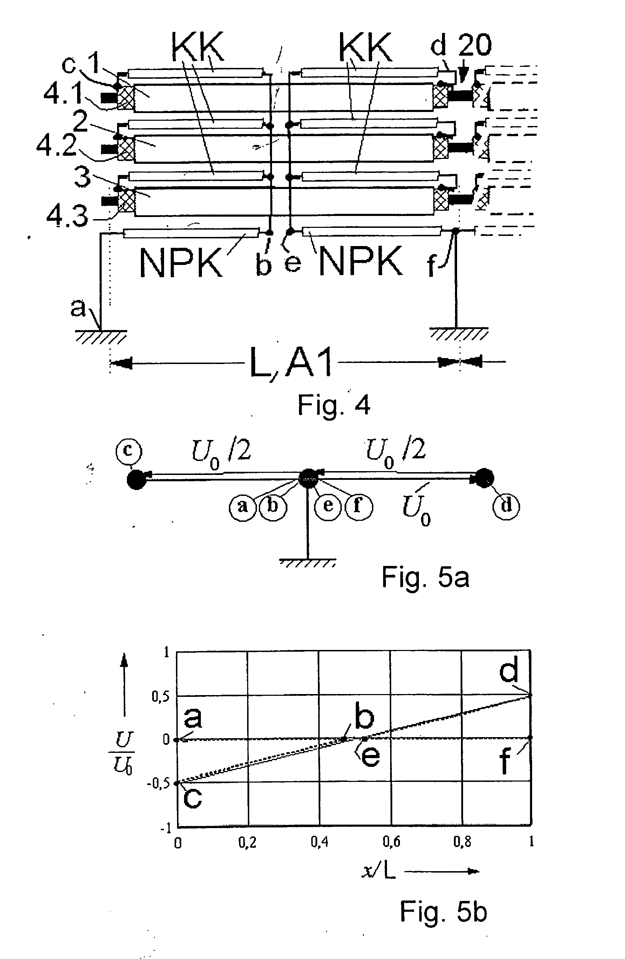

Die Beschaltung der Kabelschirme (mit den Varianten von Fig. 1, und Fig. 4 folgende) sollen noch einmal ausführlich beschrieben werden. Es wird ein Drehstromkabelsystem aus kunststoffisolierten und mit metallischem Kabelschirm 4.1, 4.2, 4.3 versehen Einleiterkabeln (Phasen R,S,T) 1, 2, 3 dargestellt, wobei die Einleiterkabel 1, 2, 3 in Unterabschnitte A1, A2, A3 aufgeteilt sind. Nach jedem Unterabschnitt A1, A2, A3 sind die Kabelschirme der Einleiterkabel 1, 2, 3 in Trennstellen 20 aufgetrennt. Die drei Unterabschnitte A1, A2, A3 haben gleiche Längen L. Die Einleiterkabel weisen einen zentralen Leiter mit Glättung auf, eine Isolierung und darüber eine Leitschicht, einen Kabelschirm und einen Außenmantel. Die folgenden Angaben ,erste(s)',zweite(s)' usw. sind fortschreitend in einer Richtung der eine Kabelstrecke bildende Unterabschnitt, also z.B. von links nach rechts, zu verstehen. Im ersten Unterabschnitt A 1 ist auf einer Teillänge x dem ersten Einleiterkabel 1 ein erstes einadriges, ungeschirmtes Kompensationskabel KK so zugeordnet, dass ein erstes Ende des ersten Kompensationskabels KK dem offenen Kabelschirmende 4.1 in der ersten Trennstelle 20 des ersten Einleiterkabels 1 dicht benachbart und an dieses offene Kabelschirmende 4.1 (Punkt b) angeschlossen ist. Das zweite Ende des ersten Kompensationskabels KK ist über ein parallel zur Kabelstrecke (zum Abschnitt A1), in vergleichbarer Lage wie das erste Kompensationskabel im Unterabschnitt liegendes erstes Neutralpfadkabel NPK geerdet (Punkt a), jedoch so, dass keine Längsspannung induziert wird.

Im dritten Unterabschnitt A3 ist dem dritten Einleiterkabel 3 auf einer Teillänge x ein drittes einadriges Kompensationskabel KK so zugeordnet, dass ein zweites Ende des dritten Kompensationskabels KK dem Kabelschirm 4.3 an der vierten Trennstelle (20) des dritten Einleiterkabels 3 dicht benachbart und an dieses Kabelschirmende 4.3 (Punkt g) angeschlossen ist. Das erste Ende des dritten Kompensationskabels KK ist über ein parallel zur Kabelstrecke, in vergleichbarer Lage wie das dritte Kompensationskabel im Unterabschnitt liegendes drittes Neutralpfadkabel NPK geerdet (Punkt h).

Im zweiten, mittleren Unterabschnitt A2 sind dem zweiten Einleiterkabel 2 hintereinander auf seiner Länge zwei einadrige Kompensationskabel KK je in halber Länge des Kompensationskabels im ersten A 1 und im dritten Unterabschnitt A3 so zugeordnet, dass das erste (links) der beiden Kompensationskabel KK dem offenen Kabelschirm 4.2 an der zweiten Trennstelle 20 des zweiten Einleiterkabels 2 dicht benachbart ist. Das zweite (rechts) der beiden Kompensationskabel KK ist dem offenen Kabelschirmende 4.2 an der dritten Trennstelle des zweiten Einleiterkabels 2 dicht benachbart. Das erste Ende des ersten der beiden Kompensationskabel KK (in Abschnitt A2) ist an das offene Kabelschirmende 4.2 an der zweiten Trennstelle des zweiten Einleiterkabels 2 angeschlossen. Das zweite Ende des ersten der beiden Kompensationskabel KK ist über ein parallel zur Kabelstrecke, in vergleichbarer Lage wie das erste der beiden Kompensationskabel im Unterabschnitt A2 liegendes erstes Neutralpfadkabel NPK zum offenen Kabelschirmende 4.1 (Punkt c) an der zweiten Trennstelle des ersten Einleiterkabels 1 in Unterabschnitt A 1 geführt. Das zweite Ende des zweiten der beiden Kompensationskabel KK ist an das offene Kabelschirmende 4.2 (Punkt e) des zweiten Einleiterkabels 2 in Unterabschnitt A2 an der dritten Trennstelle angeschlossen. Das erste Ende des zweiten der beiden Kompensationskabel KK ist über ein parallel zur Kabelstrecke, in vergleichbarer Lage wie das zweite der beiden Kompensationskabel im Unterabschnitt A2 liegendes zweites Neutralpfadkabel NPK zum Kabelschirmende 4.3 des dritten Einleiterkabels 3 im Unterabschnitt A3 an der dritten Trennstelle (Punkt f) geführt.

Die Fig. 1 zeigt nur einen Auskreuzungspfad. Zwei weitere Auskreuzungspfade sind vorhanden, wobei sich Anordnungen von Kompensationskabeln und Neutralpfadkabeln analog in zyklischer Vertauschung der Zuordnung von Phasen und Einleiterkabeln in jedem Unterabschnitt wiederholen.

Die sich ergebenden Spannungen der Schaltungspunkte a bis h gegen Erde sind im Zeigerbild der Fig. 2 wiedergegeben.

Die beiden äußeren Schirm-Unterabschnitte führen jeweils über eine Teillänge x ein Kompensationskabel KK, so dass die angeschlossenen Schirmenden (Punkte b und g) die Spannung $(-x\,U_0)$ gegen den jeweiligen Erdungspunkt (a, h) aufweisen. Die abgewandten Schirmenden steigen dann auf die Spannung $(1-x)\,U_0$ an (Punkte c, f). Hier wird der an beiden Enden beschaltete mittlere Schirmabschnitt A2 angeschlossen, so dass sich in den Anschlusspunkten (d, e) des mittleren Schirmes die maximale Schirmspannung Umax ergibt. Die Größe dieser Spannung hängt von der Wahl der Kompensationslänge x ab und gehorcht dem Zusammenhang

$$U_{\max} = U_0 \cdot \sqrt{\frac{3}{4} \cdot x^2 - \frac{3}{2} \cdot x + 1}$$

Eine Auswertung der Gleichung zeigt Fig. 3. Dort ist links die bezogene maximale Schirmspannung $(U\text{-max}/U_0)$ und rechts die mögliche prozentuale Abschnittsverlängerung $\Delta L/L$ zu Fig. 1 aufgetragen. Deutlich wird, dass die kleinstmögliche Spannung Umax etwa für die bezogene Länge x/L = 0,6 auftritt und rd. 61 % der ohne Beschaltung auftretenden maximalen Schirmspannung beträgt. Dabei gilt als zusätzliche Bedingung, dass $xU_0$ nicht größer ist als Umax. Die entsprechend mögliche prozentuale Verlängerung $\Delta L/L$ der Unterabschnitte ist ebenfalls in der Fig. 3 (gestrichelt) wiedergegeben und beträgt als mögliche prozentuale Abschnittsverlängerung $\Delta L/L$ (siehe bei x/L = 0,6) rund 65 %. Dieser Wert ergibt sich somit als Optimum, wenn auch eine erste Abschätzung für die Teillänge auf etwa die Hälfte der Abschnittslänge führt.

In Fortführung des vorher dargestellten Prinzips wird mit der Fig. 4 eine Anordnung gezeigt, die zwar einen etwas größeren Aufwand an Kompensationsleiterkabeln verlangt, dafür aber weitere, ganz erhebliche Vorteile aufweist. Es wird die vollständige Kompensation der Schirmspannungen jedes Unterabschnitts (für sich) vorgenommen. Das bedeutet, dass sich eine beliebige Zahl von Abschnitten hinter einander reihen lässt. Die Fig. 4 zeigt die Beschaltung eines Unterabschnittes zur Halbierung der Schirmspannungen.

Jetzt führt jedes Einleiterkabel in einem Schirm-Unterabschnitt (hier nur A1) jeweils über seine halbe Länge L/2 ein Kompensationskabel KK von der Abschnittsmitte nach links, so dass das angeschlossene offene Schirmende (z.B. 4.1 mit Punkt c) die Spannung $(-U_0/2)$ gegen den jeweiligen Erdungspunkt (a) aufweist. Längs des Schirmes 4.1 steigt die Spannung bis auf $+ U_0/2$ am abgewandten Schirmende (Punkt d) an. Hier wird wieder über die halbe Schirmlänge L/2 ein Kompensationskabel angeschlossen, dessen linkes Ende in der Abschnittsmitte (Punkt e) somit das Potential Null annimmt. Über das zugeordnete Neutralpfadkabel NPK wird eine Verbindung zum Erdungspunkt (f) hergestellt.

Ein besonderer Vorteil dieser Schaltung liegt darin, dass die Schirmspannung in jedem einzelnen Unterabschnitt und in jedem einzelnen Einleiterkabel durch sich selbst, d.h. durch die dort anliegenden Kompensationsleiterkabel kompensiert wird. Damit werden Längenunsymmetrien, unsymmetrische Legeanordnungen (die schon bei der Einebenenanordnung gegeben sein können) sowie Strom-Unsymmetrien automatisch kompensiert.

Fig. 5a zeigt das resultierende Zeigerdiagramm und Fig. 5b zeigt die räumliche Verteilung der Spannungen des Kabelschirms und der Kompensationsleiter in Fig. 4 an den dort definierten Orten.

Fig. 5b: Verlauf der Schirmspannung über die bezogene Länge (x/L) in Fig. 4 längs eines Unterabschnitts. Die Punkte a, b, e und f liegen auf Erdpotential. Der Verlauf zwischen den Punkten a-b und e-f ist insofern schematisch zu verstehen, weil allein in den Punkten a, b, e und f das Potential Null beträgt.

Mit der Schaltung aus Fig. 4 beträgt in allen Unterabschnitten die maximale Spannung mit Umax = $U_0/2$ nur die Hälfte derjenigen, die sich bei normalem Cross-Bonding für die Unterabschnittslänge L ergeben würde. Umgekehrt wird damit im Vergleich zum normalen Cross-Bonding bei gleichbleibender stationärer Schirmspannung eine Verdoppelung der Unterabschnittslänge L möglich. Es wird somit eine singlepoint-bonding-Schaltung vorgelegt.

Der Mehraufwand dieser Schaltung ist beschrieben durch vier einadrige Kabel, die dicht an den Hoch-oder Höchstspannungskabeln anliegend mitgeführt werden. Ob die Kabel 1-kV-Kabel sein können oder als 6-kV- oder 10-kV-Kabel ausgelegt werden müssen, müsste im jeweiligen Spezialfall entschieden werden. Die Kabel sind praktisch stromlos, bewirken also keine zusätzlichen Erwärmungen.

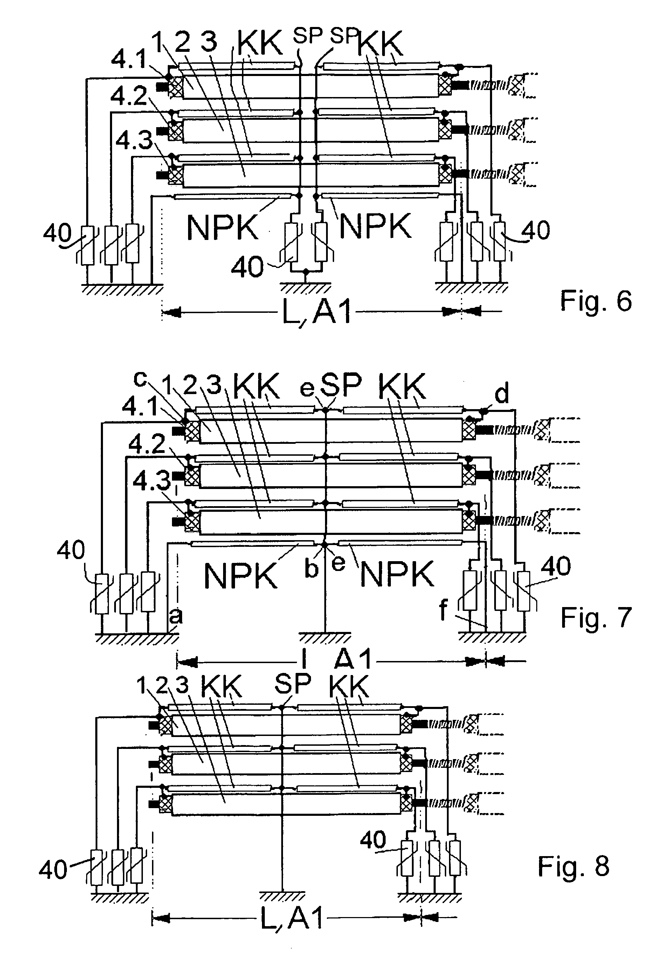

Vorzugsweise sind Erdungen und Ableiterbeschaltungen nach Fig. 6 wie bei einer normalen Cross-Bonding-Schaltung an allen Schirmenden und an den nicht direkt geerdeten Enden der Kompensationsleiterkabel KK vorzunehmen. Eine solche Ableiter-Beschaltung für einen Unterabschnitt A1 ist in Fig. 6 gezeigt. Die Schirme 4.1, 4.2, 4.3 sind zusätzlich an den beiden Enden des Unterabschnittes A1 über Ableiter 40 zu erden. Erdungen und Ableiterbeschaltungen stellen zwar zusätzliche Maßnahmen dar; sie dienen jedoch der Absicherung von möglichen Fehlereffekten (im worst case).

Eine Vereinfachung der Schaltung aus Fig. 4 (bzw. Fig. 6) ist in der Fig. 7 wiedergegeben. Hier wird eine Beschaltung mit starrer Erdung in der Abschnittsmitte (Schaltpunkt SP, und Punkte b,e) gezeigt. Jeder Abschnitt (A1) wird in seiner Mitte über die Neutralpfadkabel NPK geerdet, während beide Schirmenden (4.1 von Einleiterkabel 1; 4.2 von Einleiterkabel 2; 4.3 von Einleiterkabel 3) offen bzw. nur über Ableiter 40 und Kompensationskabel KK geerdet sind. Die Schaltung entspricht damit einer Erweiterung einer Kabelanlage mit offenen Schirmenden mit dem Resultat, dass bei vergleichbaren Schirmspannungen doppelte Unterabschnittslängen möglich sind.

Eine weitere Vereinfachung zeigt Fig. 8, in der auf das mitgeführte Neutralpfadkabel verzichtet wird, jedoch mit starrer Erdung in der Abschnittsmitte SP. Diese Schaltung hat allerdings den Nachteil, dass in Betriebsfällen ohne Ansprechen der Ableiter keine durchgängige Erdverbindung mehr gegeben ist, so dass Erdschluss-Ströme nur über das Erdreich geführt werden können. Wird der Erdleiter nicht gefordert, so bietet sie für Anlagen mit einseitiger Schirmerdung die Möglichkeit einer Verdoppelung der Kabellänge bei vergleichbaren Schirmspannungen.

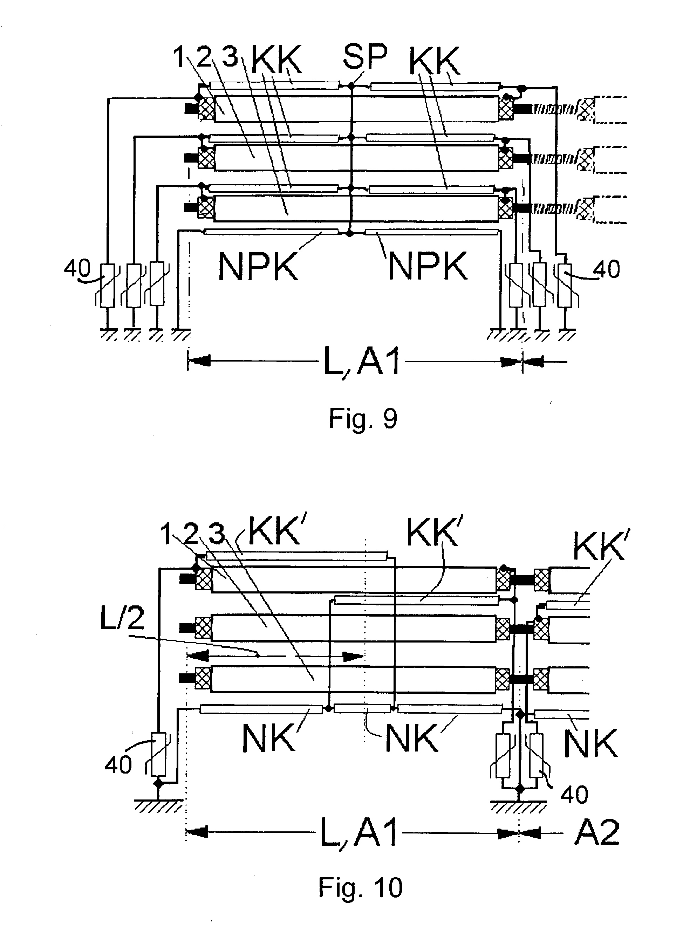

In der Fig. 9 ist noch einmal die Schaltung der Fig. 7, d.h. mit dem Neutralpfadkabel als parallelem Erdungsleiter, aufgenommen, allerdings mit der Vereinfachung, dass in der Abschnittsmitte SP — dem Übergang von den Kompensationsleitern KK auf die Neutralpfadkabel NPK — keine Erdung vorgenommen wird. Ob diese Schaltung ohne unzulässig große Überspannungen möglich ist, hängt wesentlich von den sonstigen Erdungsverhältnissen und den Erdfehlerbedingungen ab.

Ergänzende Ausführungsform zur Berücksichtigung von unterschiedlichen induzierten Spannungsbelägen.

Alle oben dargestellten Zusammenhänge zum Einsatz von Kompensationsleitern sind insofern idealisiert, als dass die in den Kompensationsleitern KK induzierte Spannung wegen des geringen, aber endlichen Abstandes kleiner ist als die in den Kabelschirm 4.1, 4.2, 4.3 induzierte Spannung. Es ist nicht auszuschließen, dass sich hieraus störende Effekte einstellen, insbesondere ein unzulässig hoher Kreisstrom in Schirm und Kompensationsleiter.

Eine weitere Kompensationsbeschaltung findet sich in Fig. 10. Prinzipiell kann eine Verbesserung noch dadurch erreicht werden, dass eine entsprechende Verlängerung des Kompensationsleiters vorgenommen wird. Hierbei wird die Länge von Kompensationskabel KK' und von Neutralpfadkabel NK - im Gegensatz zu den vorhergehenden Ausführungsbeispielen - über die halbe Länge (L/2) jedes Unterabschnitts hinaus vergrößert. Es handelt sich um eine Modifikation der Anordnung von Fig. 9. Der geringere Spannungsbelag wird durch die Verlängerung des Kompensationsleiters KK' ausgeglichen. Dies sollte kein größeres Problem darstellen, da man abschätzen kann, wo die Neutralpfadkabel NK an Stellen mit dem Potential Null verbunden werden können. Die Fig. 10 zeigt im Unterabschnitt A1 nur die Anbindung zweier ,verlängerter' Kompensationskabel KK' für das Einleiterkabel 1 (oben). Wie im zweiten Unterabschnitt A2 (angeschnitten) dargestellt, kann auch in jedem Unterschnitt ein ,verlängertes' Kompensationskabel KK' dem Einleiterkabel 2 und ein ,verlängertes' Kompensationskabel KK' dem Einleiterkabel 3 zugeordnet sein. Wobei die offenen Kabelschirmenden (4.2, 4.3) der Einleiterkabel 2 und 3 ebenfalls über Überspannungsableiter 40 an Erdpotential geschaltet sind. Die Verlängerungen richten sich nach den aus der jeweiligen Verlegegeometrie resultieren Spannungsbelägen.

## Patentansprüche

1.  Drehstromkabelsystem aus kunststoffisolierten und mit metallischem-Kabelschirm versehenen Einleiterkabeln (1, 2, 3) mit Auskreuzungsbeschaltung, wobei das Drehstromkabelsystem und die Einleiterkabel (1, 2, 3) in drei Unterabschnitte (A1, A2, A3) aufgeteilt sind, und die Unterabschnitte (A1, A2, A3) durch Trennstellen (20) begrenzt sind, in denen die Kabelschirmenden (4.1, 4.2, 4.3) der Einleiterkabel (1, 2, 3) aufgetrennt und zugänglich sind, **dadurch gekennzeichnet**,

    ▪ dass in einem ersten Unterabschnitt (A1) einem ersten Einleiterkabel (1) und in einem dritten Unterabschnitt (A3) einem dritten Einleiterkabel (3) jeweils parallel zu den Unterabschnitten (A1, A2, A3) ein Kompensationskabel (KK) eng benachbart zugeordnet ist, wobei die Kompensationskabel (KK) hintereinander liegen und eine kürzere Länge (x) als die Einleiterkabel (1, 3) haben,
    ▪ und dass jedes einem Einleiterkabel (1, 3) im ersten und im dritten Unterabschnitt (A1, A3) benachbarte Kompensationskabel (KK) mit seinem ersten Ende (b, g) an das offene Kabelschirmende (4.1, 4.3) des eng benachbarten Einleiterkabels (1, 3) angeschlossen ist,
    ▪ und die angeschlossenen Kompensationskabel (KK) an ihrem zweiten Ende je über ein Neutralpfadkabel (NPK) geerdet (a, h) sind,
    ▪ und dass in einem zweiten Unterabschnitt (A2) dem zweiten Einleiterkabel (2) jeweils parallel zu dem zweiten Unterabschnitt (A2) zwei Kompensationskabel (KK) eng benachbart so zugeordnet sind, dass jedes benachbarte Kompensationskabel (KK) mit seinem ersten Ende an je ein offenes Kabelschirmende (d, e, 4.2) des zweiten Einleiterkabels (2) im zweiten Unterabschnitt (A2) angeschlossen ist, und dass den beiden Kompensationskabeln (KK) im zweiten Unterabschnitt (A2) je ein erstes und zweites Neutralpfadkabel (NPK) zugeordnet ist und an sie angeschlossen ist, wobei die Kompensationskabel (KK) eine kürzere Länge (x) als das zweite Einleiterkabel (2) haben, und

■ das erste Neutralpfadkabel (NPK) im zweiten Unterabschnitt (A2) an das offene Kabelschirmende (c, 4.1) des ersten Einleiterkabels (1) im ersten Unterabschnitt (A1) und das zweite Neutralpfadkabel (NPK) im zweiten Unterabschnitt (A2) an das offene Kabelschirmende (f, 4.3) des dritten Einleiterkabels (3) im dritten Unterabschnitt (A3) jeweils andernends angeschlossen ist, und wobei sich Anordnungen von Kompensationskabeln (KK) und Neutralpfadkabeln (NPK) analog in zyklischer Vertauschung der Zuordnung von Phasen und Einleiterkabeln (1, 2, 3) in jedem Unterabschnitt (A1, A2, A3) wiederholen.

2. Drehstromkabelsystem nach Anspruch 1, **dadurch gekennzeichnet, dass** in jedem der Unterabschnitte (A1, A2, A3), die jeweils gleichlang ausgebildet sind, die Kompensationskabel (KK) und die Neutralpfadkabel (NPK) in einer Länge (x) ausgelegt sind, wobei die Länge (x) das 0,61 fache der Länge (L) eines Unterabschnitts (A1, A2, A3) beträgt.

3. Drehstromkabelsystem aus kunststoffisolierten und mit metallischem Kabelschirm versehenen Einleiterkabeln (1, 2, 3), wobei in dem Drehstromkabelsystem ein Abschnitt (A1) zwischen einer ersten und einer zweiten Trennstelle (20) gebildet ist,

■ wobei in der ersten Trennstelle (20) zu Anfang des Abschnitts (A1) ein erstes Kabelschirmende (4.1, 4,2, 4.3) der Einleiterkabel (1, 2, 3) und in der zweiten Trennstelle (20) am Ende des Abschnitts (A1) ein zweites Kabelschirmende (4.1, 4.2, 4.3) der Einleiterkabel (1, 2, 3) aufgetrennt und zugänglich sind,
■ wobei in mindestens einer Trennstelle (20) die Kabelschirmenden (4.1, 4.2, 4.3) der Einleiterkabel (1, 2, 3) über Kompensationskabel (KK) geerdet sind,
**dadurch gekennzeichnet**,
■ dass im Abschnitt (A1) jedem Einleiterkabel (1, 2, 3) ein erstes und ein zweites Kompensationskabel (KK) derart zugeordnet ist, dass parallel zum Abschnitt (A1) die Kompensationskabel (KK) hintereinander und eng benachbart zu jedem Einleiterkabel (1, 2, 3) liegen, und eine kürzere Länge als die Einleiterkabel (1, 2, 3) haben,

■ dass ein erstes Ende des ersten Kompensationskabels (KK) am ersten Kabelschirmende (4.1, 4.2, 4.3) des nächst benachbarten Einleiterkabels (1, 2, 3) angeschaltet ist,
■ dass ein zweites Ende des zweiten Kompensationskabels (KK) am zweiten Kabelschirmende (4.1, 4.2, 4.3) des nächst benachbarten Einleiterkabels (1, 2, 3) angeschaltet ist, und
■ dass im Abschnitt (A1) ein erstes und ein zweites Neutralpfadkabel (NPK) parallel zum Abschnitt (A1) und hintereinander liegend angeordnet sind,
■ dass ein zweites Ende des ersten Kompensationskabels (KK) an das erste Neutralpfadkabel (NPK) geschaltet und über dieses Neutralpfadkabel (NPK) geerdet ist und ein erstes Ende des zweiten Kompensationskabels an das zweite Neutralpfadkabel (NPK) geschaltet und über dieses geerdet ist.

4. Drehstromkabelsystem nach Anspruch 3, **dadurch gekennzeichnet, dass** in beiden Trennstellen (20) die Kabelschirmenden (4.1, 4.2, 4.3) jeweils der Einleiterkabel (1, 2, 3) über Überspannungsableiter (40) geerdet sind, und dass in der Mitte des Abschnitts (A1) Schaltpunkte (SP) zwischen dem zweiten Ende der ersten Kompensationskabel (KK) und erstem Neutralpfadkabel (NPK) und Schaltpunkte (SP) zwischen dem ersten Ende der zweiten Kompensationskabel (KK) und zweitem Neutralpfadkabel (NPK) vorhanden sind und die Schaltpunkte (SP) über Überspannungsableiter (40) geerdet sind.

5. Drehstromkabelsystem nach Anspruch 3, **dadurch gekennzeichnet, dass** in beiden Trennstellen (20) die Kabelschirmenden (4.1, 4.2, 4.3) jeweils der Einleiterkabel (1, 2, 3) über Überspannungsableiter (40) geerdet sind, und dass die beiden hinter einander liegenden Kompensationskabel (KK) an jeweils ihren ersten Enden an je ein Kabelschirmende (4.1, 4.2, 4.3) des jeweiligen Einleiterkabels (1, 2, 3) angeschaltet und in der Mitte des Abschnitts (A1) die beiden hinter einander liegenden Kompensationskabel (KK) mit ihren zweiten Enden in einem Schaltpunkt (SP) verbunden sind, und dass in diesem Schaltpunkt (SP) eine Erdung erfolgt.

6. Drehstromkabelsystem nach Anspruch 3, **dadurch gekennzeichnet, dass** in beiden Trennstellen die Kabelschirmenden (4.1, 4.2, 4.3) jeweils der Einleiterkabel (1, 2, 3) über Überspannungsableiter (40) geerdet sind, und dass die beiden hinter einander liegenden Kompensationskabel (KK) an jeweils ihren ersten Enden an je ein Kabelschirmende (4.1, 4.2, 4.3) des jeweiligen Einleiterkabels (1, 2, 3) angeschaltet und in der Mitte des Abschnitts (A1) die beiden hinter einander liegenden Kompensationskabel (KK) mit ihren zweiten Enden in einem Schaltpunkt (SP) verbunden sind.

7. Drehstromkabelsystem nach Anspruch 3, **dadurch gekennzeichnet, dass** Kompensationskabel (KK) und Neutralpfadkabel (NPK) eine Länge (x) von der Hälfte des Abschnitts (L, A1) haben.

8. Drehstromkabelsystem nach Anspruch 3, **dadurch gekennzeichnet, dass** in beiden Trennstellen (20) die Kabelschirmenden (4.1, 4.2, 4.3) jeweils der Einleiterkabel (1, 2, 3) über Überspannungsableiter (40) geerdet sind, und dass die beiden hinter einander liegenden Kompensationskabel (KK') jeweils eine Länge (x) haben, die größer ist als die Hälfte des Abschnitts (A1).

9. Drehstromkabelsystem aus kunststoffisolierten und mit metallischem Kabelschirm versehenen Einleiterkabeln (1, 2, 3), wobei in dem Drehstromkabelsystem ein Abschnitt (A1) zwischen zwei Trennstellen (20) gebildet ist,

  - wobei in der ersten Trennstelle (20) ein erstes Kabelschirmende (4.1, 4.2, 4.3) jeweils der Einleiterkabel (1, 2, 3) und in der zweiten Trennstelle (20) ein zweites Kabelschirmende (4.1, 4.2, 4.3) jeweils der Einleiterkabel (1, 2, 3) aufgetrennt und zugänglich sind,
  - wobei in mindestens einer Trennstelle (20) die Kabelschirmenden (4.1, 4.2, 4.3) der Einleiterkabel (1, 2, 3) geerdet sind,
  **dadurch gekennzeichnet,**
  - dass im Abschnitt (A1) jedem Einleiterkabel (1, 2, 3) ein erstes und ein zweites Kompensationskabel (KK) derart zugeordnet ist, dass parallel zum Abschnitt (A1) die Kompensationskabel (KK) hintereinander und eng benachbart zu jedem Einleiterkabel (1, 2, 3) liegen, und eine kürzere Länge als die Einleiterkabel (1, 2, 3) haben,
  - dass jeweils ein erstes Ende des ersten Kompensationskabels (KK) am ersten Kabelschirmende (4.1, 4.2, 4.3) angeschaltet ist, und jeweils ein zweites Ende des zweiten Kompensationskabels (KK) am zweiten Kabelschirmende (4.1, 4.2, 4.3) angeschaltet ist, und
  - dass jeweils die beiden hintereinander liegenden Kompensationskabel (KK) in ihren anderen Enden in der Mitte des Abschnitts (A1) in einem Schaltpunkt (SP) verbunden sind, und dass in diesem Schaltpunkt (SP) eine Erdung erfolgt.

10. Drehstromkabelsystem aus kunststoffisolierten und mit metallischem Kabelschirm versehenen Einleiterkabeln, wobei in dem Drehstromkabelsystem ein Abschnitt (A1) zwischen zwei Trennstellen (20) gebildet ist,

  - wobei in der ersten Trennstelle (20) ein erstes Kabelschirmende (4.1, 4.2, 4.3) jeweils der Einleiterkabel (1, 2, 3) und in der zweiten Trennstelle (20) ein zweites Kabelschirmende (4.1, 4.2, 4.3) jeweils der Einleiterkabel (1, 2, 3) aufgetrennt und zugänglich sind,
  - und wobei im Abschnitt (A1) jedem Einleiterkabel (1, 2, 3) ein erstes und ein zweites Kompensationskabel (KK) derart eng zugeordnet ist, dass parallel zum Abschnitt (A1) die Kompensationskabel (KK) hintereinander und eng benachbart zu jedem Einleiterkabel (1, 2, 3) liegen, und eine kürzere Länge als die Einleiterkabel (1, 2, 3) haben,
  und
  - ein erstes Ende jeweils des ersten Kompensationskabels (KK) am ersten Kabelschirmende (4.1, 4.2, 4.3) des jeweiligen Einleiterkabels (1, 2, 3) angeschaltet ist,
  - und ein zweites Ende jeweils des zweiten Kompensationskabels (KK) am zweiten Kabelschirmende (4.1, 4.2, 4.3) des jeweiligen Einleiterkabels (1, 2, 3) angeschaltet ist,
  - wobei die zweiten Enden der jeweiligen ersten Kompensationskabel (KK) zusammen geschaltet sind und die ersten Enden der jeweiligen zweiten Kompensationskabel (KK) zusammen geschaltet sind,
  - und die zusammengeschalteten ersten Enden der zweiten Kompensationskabel (KK) über ein zweites parallel zu den zweiten Kompensationskabeln (KK) im Abschnitt (A1) liegendes Neutralpfadkabel (NPK) geerdet sind,
  - und die zusammengeschalteten zweiten Enden der ersten Kompensationskabel (KK) über ein erstes parallel zu den ersten Kompensationskabeln (KK) im Abschnitt (A1) liegendes Neutralpfadkabel (NPK) geerdet sind.

## Claims

1. Alternating-current cable system comprising single-conductor cables (1, 2, 3) which are insulated with plastics material and which are provided with a metal cable shield having a transposition circuit, the alternating-current cable system and the single-conductor cables (1, 2, 3) being sub-divided into three sub-portions (A1, A2, A3) and the sub-portions (A1, A2, A3) being delimited by means of separation locations (20) in which the cable shield ends (4.1, 4.2, 4.3) of the single-conductor cables (1, 2, 3) are separated and accessible,
**characterised in that**

• in a first sub-portion (A1) a compensation cable (KK) is associated in a closely adjacent manner with a first single-conductor cable (1) and in a third sub-portion (A3) a compensation cable (KK) is associated in a closely adjacent manner with a third single-conductor cable (3) parallel with the sub-portions (A1, A2, A3), respectively, the compensation cables (KK) being located one behind the other and having a shorter length (x) than the single-conductor cables (1, 3),
• and **in that** each compensation cable (KK) which is adjacent to a single-conductor cable (1, 3) in the first and in the third sub-portion (A1, A3) is connected with the first end (b, g) thereof to the open cable shield end (4.1, 4.3) of the closely adjacent single-conductor cable (1, 3),
• and the connected compensation cables (KK) are earthed (a, h) at the second end thereof in each case via a neutral path cable (NPK),
• and **in that**, in a second sub-portion (A2) two compensation cables (KK) are associated with the second single-conductor cable (2) in a closely adjacent manner parallel with the second sub-portion (A2) in such a manner that each adjacent compensation cable (KK) is connected with the first end thereof to an open cable shield end (d, e, 4.2) of the second single-conductor cable (2) in the second sub-portion (A2), and **in that** a first and a second neutral path cable (NPK) is associated with the two compensation cables (KK) in the second sub-portion (A2) and connected thereto, the compensation cables (KK) having a shorter length (x) than the second single-conductor cable (2) and
• the first neutral path cable (NPK) being connected in the second sub-portion (A2) to the open cable shield end (c, 4.1) of the first single-conductor cable (1) in the first sub-portion (A1) and the second neutral path cable (NPK) being connected in the second sub-portion (A2) to the open cable shield end (f, 4.3) of the third single-conductor cable (3) in the third sub-portion (A3) at the other end, respectively, and arrangements of compensation cables (KK) and neutral path cables (NPK) being repeated in a similar manner with cyclical transposition of the association of phases and single-conductor cables (1, 2, 3) in each sub-portion (A1, A2, A3).

2. Alternating-current cable system according to claim 1, **characterised in that** in each of the sub-portions (A1, A2, A3), which are each constructed so as to be of the same length, the compensation cables (KK) and the neutral path cables (NPK) are configured with a length (x), the length (x) being 0.61 times the length (L) of a sub-portion (A1, A2, A3).

3. Alternating-current cable system comprising single-conductor cables (1, 2, 3) which are insulated with plastics material and which are provided with a metal cable shield, a portion (A1) being formed in the alternating-current cable system between a first and a second separation location (20),

• in the first separation location (20) at the beginning of the portion (A1), a first cable shield end (4.1, 4.2, 4.3) of the single-conductor cables (1, 2, 3) being opened and accessible and in the second separation location (20) at the end of the portion (A1) a second cable shield end (4.1, 4.2, 4.3) of the single-conductor cables (1, 2, 3) being opened and accessible,
• the cable shield ends (4.1, 4.2, 4.3) of the single-conductor cables (1, 2, 3) being earthed in at least one separation location (20) by means of compensation cables (KK),
**characterised in that**
• in the portion (A1), a first and a second compensation cable (KK) is associated with each single-conductor cable (1, 2, 3) in such a manner that, in a state parallel with the portion (A1), the compensation cables (KK) are located one behind the other and closely adjacent to each single-conductor cable (1, 2, 3) and have a shorter length than the single-conductor cables (1, 2, 3),
• **in that** a first end of the first compensation cable (KK) is connected to the first cable shield end (4.1, 4.2, 4.3) of the most closely adjacent single-conductor cable (1, 2, 3),
• **in that** a second end of the second compensation cable (KK) is connected to the second cable shield end (4.1, 4.2, 4.3) of the most closely adjacent single-conductor cable (1, 2, 3), and
• **in that**, in the portion (A1) a first and a second neutral path cable (NPK) are arranged parallel with the portion (A1) and one behind the other,
• **in that** a second end of the first compensation cable (KK) is connected to the first neutral path cable (NPK) and is earthed by means of this neutral path cable (NPK), and a first end of the second compensation cable is connected to the second neutral path cable (NPK) and earthed thereby.

4. Alternating-current cable system according to claim 3, **characterised in that** in both separation locations (20) the cable shield ends (4.1, 4.2, 4.3) of the single-conductor cables (1, 2, 3) are earthed by means of excess voltage arrestors (40) and **in that**, in the centre of the portion (A1), switching points (SP) are provided between the second end of the first compensation cables (KK) and the first neutral path cable (NPK) and switching points (SP) are provided between the first end of the second compensation cables (KK) and second neutral path cable (NPK) and the switching points (SP) are earthed by means of excess voltage arrestors (40).

5. Alternating-current cable system according to claim 3, **characterised in that** in both separation locations (20) the cable shield ends (4.1, 4.2, 4.3) of each of the single-conductor cables (1, 2, 3) are earthed by means of excess voltage arrestors (40), and **in that** the two compensation cables (KK) which are located one behind the other are each connected at the first ends thereof to a cable shield end (4.1, 4.2, 4.3) of the respective single-conductor cable (1, 2, 3) and, in the centre of the portion (A1), the two compensation cables (KK) which are located one behind the other are connected with the second ends thereof in a switching point (SP), and **in that** an earthing operation is carried out at this switching point (SP).

6. Alternating-current cable system according to claim 3, **characterised in that** in both separation locations the cable shield ends (4.1, 4.2, 4.3) of each of the single-conductor cables (1, 2, 3) are earthed by means of excess voltage arrestors (40), and **in that** the two compensation cables (KK) which are located one behind the other are each connected at the first ends thereof to a cable shield end (4.1, 4.2, 4.3) of the respective single-conductor cable (1, 2, 3) and, in the centre of the portion (A1), the two compensation cables (KK) which are located one behind the other are connected with the second ends thereof at a switching point (SP).

7. Alternating-current cable system according to claim 3, **characterised in that** compensation cables (KK) and neutral path cables (NPK) have a length (x) of half of the portion (L, A1).

8. Alternating-current cable system according to claim 3, **characterised in that** in both separation locations (20) the cable shield ends (4.1, 4.2, 4.3) of each of the single-conductor cables (1, 2, 3) are earthed by means of excess voltage arrestors (40), and **in that** the two compensation cables (KK') located one behind the other each have a length (x) which is greater than half of the portion (A1).

9. Alternating-current cable system comprising single-conductor cables (1, 2, 3) which are insulated with plastics material and which are provided with a metal cable shield, a portion (A1) being formed in the alternating-current cable system between two separation locations (20),

    • in the first separation location (20), a first cable shield end (4.1, 4.2, 4.3) of each of the single-conductor cables (1, 2, 3) being opened and accessible and, in the second separation location (20), a second cable shield end (4.1, 4.2, 4.3) of each of the single-conductor cables (1, 2, 3) being opened and accessible,
• the cable shield ends (4.1, 4.2, 4.3) of the single-conductor cables (1, 2, 3) being earthed in at least one separation location (20),
**characterised in that**,
• in the portion (A1), a first and second compensation cable (KK) is associated with each single-conductor cable (1, 2, 3) in such a manner that, in a state parallel with the portion (A1), the compensation cables (KK) are located one behind the other and closely adjacent to each single-conductor cable (1, 2, 3) and have a shorter length than the single-conductor cables (1, 2, 3),
• **in that** a first end of the first compensation cable (KK) is connected to the first cable shield end (4.1, 4.2, 4.3) and a second end of the second compensation cable (KK) is connected to the second cable shield end (4.1, 4.2, 4.3), respectively, and
• **in that** the two compensation cables (KK) which are located one behind the other are connected at the other ends thereof in the centre of the portion (A1) at a switching point (SP) and **in that** an earthing operation is carried out at this switching point (SP).

10. Alternating-current cable system comprising single-conductor cables which are insulated with plastics material and which are provided with a metal cable shield, a portion (A1) being formed in the alternating-current cable system between two separation locations (20),

    • in the first separation location (20), a first cable shield end (4.1, 4.2, 4.3) of each of the single-conductor cables (1, 2, 3) being opened and accessible and in the second separation location (20) a second cable shield end (4.1, 4.2, 4.3) of each of the single-conductor cables (1, 2, 3) being opened and accessible,
• and, in the portion (A1), a first and a second compensation cable (KK) being associated with each single-conductor cable (1, 2, 3) in such a close manner that, in a state parallel with the portion (A1), the compensation cables (KK) are located one behind the other and closely adjacent to each single-conductor cable (1, 2, 3) and have a shorter length than the single-conductor cables (1, 2, 3), and
• a first end of the first compensation cable (KK) is connected to the first cable shield end (4.1, 4.2, 4.3) of the respective single-conductor cable (1, 2, 3),
• and a second end of the second compensation cable (KK) is connected to the second cable shield end (4.1, 4.2, 4.3) of the respective single-conductor cable (1, 2, 3),

• the second ends of the respective first compensation cables (KK) being connected together and the first ends of the respective second compensation cables (KK) being connected together,

• and the connected first ends of the second compensation cables (KK) being earthed by means of a second neutral path cable (NPK) which is located parallel with the second compensation cables (KK) in the portion (A1),

• and the connected second ends of the first compensation cables (KK) being earthed by means of a first neutral path cable (NPK) which is located parallel with the first compensation cables (KK) in the portion (A1).

## Revendications

1. Système de câble triphasé constitué de câbles unifilaires (1, 2, 3) isolés par du plastique et munis d'un blindage de câble métallique, avec un circuit de croisement, le système de câble triphasé et les câbles unifilaires (1, 2, 3) étant répartis en trois sous-sections (A1, A2, A3), et les sous-sections (A1, A2, A3) étant délimitées par des postes de sectionnement (20), dans lesquels les extrémités de blindage de câble (4.1, 4.2, 4.3) des câbles unifilaires (1, 2, 3) sont séparées et accessibles, **caractérisé en ce que**

   ▪ un câble de compensation (KK) est associé en voisinage immédiat à un premier câble unifilaire (1) dans une première sous-section (A1) et à un troisième câble unifilaire (3) dans une troisième sous-section (A3) de manière respectivement parallèle aux sous-sections (A1, A2, A3), les câbles de compensation (KK) se succédant et présentant une longueur (x) plus courte que les câbles unifilaires (1, 3),
   ▪ et chaque câble de compensation (KK) voisin d'un câble unifilaire (1, 3) dans les première et troisième sous-sections (A1, A3) est raccordé par sa première extrémité (b, g) à l'extrémité de blindage de câble ouverte (4.1, 4.3) du câble unifilaire (1, 3) en voisinage immédiat,
   ▪ et les câbles de compensation (KK) raccordés sont mis à la terre (a, h) au niveau de leurs secondes extrémités respectivement par l'intermédiaire d'un câble de neutre (NPK),
   ▪ et deux câbles de compensation (KK) sont associés en voisinage immédiat au deuxième câble unifilaire (2) dans une deuxième sous-section (A2) de manière respectivement parallèle à la deuxième sous-section (A2) de sorte que chaque câble de compensation (KK) voisin est raccordé par sa première extrémité à respectivement une extrémité de blindage de câble ouverte (d, e, 4.2) du deuxième câble unifilaire (2) dans la deuxième sous-section (A2), et respectivement des premier et second câbles de neutre (NPK) sont associés et raccordés aux deux câbles de compensation (KK) dans la deuxième sous-section (A2), les câbles de compensation (KK) présentant une longueur (x) plus courte que le deuxième câble unifilaire (2), et
   ▪ le premier câble de neutre (NPK) dans la deuxième sous-section (A2) est respectivement raccordé au niveau de son autre extrémité à l'extrémité de blindage de câble ouverte (c, 4.1) du premier câble unifilaire (1) dans la première sous-section (A1) et le second câble de neutre (NPK) dans la deuxième sous-section (A2) est respectivement raccordé au niveau de son autre extrémité à l'extrémité de blindage de câble ouverte (f, 4.3) du troisième câble unifilaire (3) dans la troisième sous-section (A3), et des agencements de câbles de compensation (KK) et de câbles de neutre (NPK) se répétant de manière identique dans chaque sous-section (A1, A2, A3) avec une permutation cyclique de l'association des phases et des câbles unifilaires (1, 2, 3).

2. Système de câble triphasé selon la revendication 1, **caractérisé en ce que**, dans chacune des sous-sections (A1, A2, A3), qui sont respectivement réalisées de même longueur, les câbles de compensation (KK) et les câbles de neutre (NPK) sont réalisés en une longueur (x), la longueur (x) correspondant à 0,61 fois la longueur (L) d'une sous-section (A1, A2, A3).

3. Système de câble triphasé constitué de câbles unifilaires (1, 2, 3) isolés par du plastique et munis d'un blindage de câble métallique, une section (A1) étant formée dans le système de câble triphasé entre des premier et second postes de sectionnement (20),

   ▪ dans lequel, dans le premier poste de sectionnement (20) au début de la section (A1), une première extrémité de blindage de câble (4.1, 4.2, 4.3) des câbles unifilaires (1, 2, 3) et, dans le second poste de sectionnement (20) à la fin de la section (A1), une seconde extrémité de blindage de câble (4.1, 4.2, 4.3) des câbles unifilaires (1, 2, 3) sont ouverts et accessibles,
   ▪ dans lequel, dans au moins un poste de sectionnement (20), les extrémités de blindage de câble (4.1, 4.2, 4.3) des câbles unifilaires (1, 2, 3) sont mises à la terre grâce à des câbles de compensation (KK),
   **caractérisé en ce que**,
   ▪ dans la section (A1), des premier et second câbles de compensation (KK) sont associés à chaque câble unifilaire (1, 2, 3) de sorte que les câbles de compensation (KK) se succèdent de manière parallèle à la section (A1) et se situent au voisinage immédiat de chaque câble unifilaire (1, 2, 3), et présentent une longueur plus courte que les câbles unifilaires (1, 2, 3),

▪ une première extrémité du premier câble de compensation (KK) est raccordée à la première extrémité de blindage de câble (4.1, 4.2, 4.3) du câble unifilaire (1, 2, 3) situé au voisinage le plus immédiat,

▪ une seconde extrémité du second câble de compensation (KK) est raccordée à la seconde extrémité de blindage de câble (4.1, 4.2, 4.3) du câble unifilaire (1, 2, 3) au voisinage le plus immédiat, et

▪ dans la section (A1), des premier et second câbles de neutre (NPK) sont agencés parallèlement à la section (A1) et se succédant,

▪ une seconde extrémité du premier câble de compensation (KK) est commutée au premier câble de neutre (NPK) et est mise à la terre par l'intermédiaire dudit câble de neutre (NPK) et une première extrémité du second câble de compensation est commutée au second câble de neutre (NPK) et est mise à la terre par l'intermédiaire dudit câble de neutre (NPK).

4. Système de câble triphasé selon la revendication 3, **caractérisé en ce que**, dans les deux postes de sectionnement (20), les extrémités de blindage de câble (4.1, 4.2, 4.3) respectives des câbles unifilaires (1, 2, 3), sont mises à la terre par l'intermédiaire de dérivateurs de surtension (40), et, au milieu de la section (A1), des points de commutation (SP) sont présents entre la seconde extrémité des premiers câbles de compensation (KK) et le premier câble de neutre (NPK) et des points de commutation (SP) sont présents entre la première extrémité des seconds câbles de compensation (KK) et le second câble de neutre (NPK) et les points de commutation (SP) sont mis à la terre par l'intermédiaire de dérivateurs de surtension (40).

5. Système de câble triphasé selon la revendication 3, **caractérisé en ce que**, dans les deux postes de sectionnement (20), les extrémités de blindage de câble (4.1, 4.2, 4.3) respectives des câbles unifilaires (1, 2, 3) sont mises à la terre par l'intermédiaire de dérivateurs de surtension (40), et les deux câbles de compensation (KK) se succédant sont raccordés par respectivement leur première extrémité à respectivement une extrémité de blindage de câble (4.1, 4.2, 4.3) du câble unifilaire (1, 2, 3) respectif et, au milieu de la section (A1), les deux câbles de compensation (KK) se succédant sont reliés par leurs secondes extrémités en un point de commutation (SP), et une mise à la terre a lieu dans ledit point de commutation (SP).

6. Système de câble triphasé selon la revendication 3, **caractérisé en ce que**, dans les deux postes de sectionnement, les extrémités de blindage de câble (4.1, 4.2, 4.3) respectives des câbles unifilaires (1, 2, 3) sont mises à la terre par l'intermédiaire de dérivateurs de surtension (40), et les deux câbles de compensation (KK) se succédant sont raccordés par respectivement leur première extrémité à respectivement une extrémité de blindage de câble (4.1, 4.2, 4.3) du câble unifilaire (1, 2, 3) respectif et, au milieu de la section (A1), les deux câbles de compensation (KK) se succédant sont reliés par leurs secondes extrémités en un point de commutation (SP).

7. Système de câble triphasé selon la revendication 3, **caractérisé en ce que** les câbles de compensation (KK) et les câbles de neutre (NPK) présentent une longueur (x) égale à la moitié de la section (L, A1).

8. Système de câble triphasé selon la revendication 3, **caractérisé en ce que**, dans les deux postes de sectionnement (20), les extrémités de blindage de câble (4.1, 4.2, 4.3) respectives des câbles unifilaires (1, 2, 3) sont mises à la terre par l'intermédiaire de dérivateurs de surtension (40), et les deux câbles de compensation (KK') se succédant présentent respectivement une longueur (x) qui est supérieure à la moitié de la section (A1).

9. Système de câble triphasé constitué de câbles unifilaires (1, 2, 3) isolés par du plastique et munis d'un blindage de câble métallique, dans lequel, dans le système de câble triphasé, une section (A1) est formée entre deux postes de sectionnement (20),

▪ dans lequel, dans le premier poste de sectionnement (20), une première extrémité de blindage de câble (4.1, 4.2, 4.3) respective des câbles unifilaires (1, 2, 3) et, dans le second poste de sectionnement (20), une seconde extrémité de blindage de câble (4.1, 4.2, 4.3) respective des câbles unifilaires (1, 2, 3) sont ouvertes et accessibles,

▪ dans lequel, dans au moins un poste de sectionnement (20), les extrémités de blindage de câble (4.1, 4.2, 4.3) des câbles unifilaires (1, 2, 3) sont mises à la terre,

**caractérisé en ce que**,

▪ dans la section (A1), des premier et second câbles de compensation (KK) sont associés à chaque câble unifilaire (1, 2, 3) de sorte que les câbles de compensation (KK) se succèdent et soient au voisinage immédiat de chaque câble unifilaire (1, 2, 3) de manière parallèle à la section (A1), et présentent une longueur plus courte que les câbles unifilaires (1, 2, 3),

▪ respectivement une première extrémité du premier câble de compensation (KK) est raccordée à la première extrémité de blindage de câble (4.1, 4.2, 4.3), et respectivement une seconde extrémité du second câble de compensation (KK) est raccordée à la seconde extrémité de blindage de câble (4.1, 4.2, 4.3), et

- respectivement les deux câbles de compensation (KK) se succédant sont reliés par leurs autres extrémités au milieu de la section (A1) en un point de commutation (SP), et une mise à la terre a lieu dans ledit point de commutation (SP).

10. Système de câble triphasé constitué de câbles unifilaires isolés par du plastique et munis d'un blindage de câble métallique, dans lequel, dans le système de câble triphasé, une section (A1) est formée entre deux postes de sectionnement (20),

- dans lequel, dans le premier poste de sectionnement (20), une première extrémité de blindage de câble (4.1, 4.2, 4.3) respective des câbles unifilaires (1, 2, 3) et, dans le second poste de sectionnement (20), une seconde extrémité de blindage de câble (4.1, 4.2, 4.3) respective des câbles unifilaires (1, 2, 3) sont ouvertes et accessibles,
- et dans lequel, dans la section (A1), des premier et second câbles de compensation (KK) sont étroitement associés à chaque câble unifilaire (1, 2, 3) de sorte que les câbles de compensation (KK) se succèdent de manière parallèle à la section (A1) et se situent au voisinage immédiat de chaque câble unifilaire (1, 2, 3), et présentent une longueur plus courte que les câbles unifilaires (1, 2, 3), et
- une première extrémité respective du premier câble de compensation (KK) est raccordée à la première extrémité de blindage de câble (4.1, 4.2, 4.3) du câble unifilaire (1, 2, 3) respectif,
- et une seconde extrémité respective du second câble de compensation (KK) est raccordée à la seconde extrémité de blindage de câble (4.1, 4.2, 4.3) du câble unifilaire (1, 2, 3) respectif,
- dans lequel les secondes extrémités des respectivement premiers câbles de compensation (KK) sont accouplées et les premières extrémités des respectivement seconds câbles de compensation (KK) sont accouplées,
- et les premières extrémités accouplées des seconds câbles de compensation (KK) sont mises à la terre par l'intermédiaire d'un second câble de neutre (NPK) situé dans la section (A1) de manière parallèle aux seconds câbles de compensation (KK),
- et les secondes extrémités accouplées des premiers câbles de compensation (KK) sont mises à la terre par l'intermédiaire d'un premier câble de neutre (NPK) situé dans la section (A1) de manière parallèle aux premiers câbles de compensation (KK).

Fig. 1

Fig. 3

Fig. 2

Fig. 4

Fig. 5a

Fig. 5b

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19512018 C1
- EP 71435 B1
- US 4464583 A